Europäisches Patentamt

European Patent Office

Office européen des brevets

(11) Veröffentlichungsnummer: **0 184 799**
**A2**

(12) **EUROPÄISCHE PATENTANMELDUNG**

(21) Anmeldenummer: **85115596.0**

(22) Anmeldetag: **07.12.85**

(51) Int. Cl.⁴: **F 16 L 37/28**

(30) Priorität: **11.12.84 DE 3445129**

(43) Veröffentlichungstag der Anmeldung: **18.06.86**
**Patentblatt 86/25**

(84) Benannte Vertragsstaaten: **AT BE CH DE FR GB IT LI LU NL SE**

(71) Anmelder: **RECTUS-APPARATEBAU Walter Klein GmbH, Daimlerstrasse 7, D-7147 Eberdingen-Nussdorf (DE)**

(72) Erfinder: **Klein, Wolfgang, Mönsheimer Weg 8, D-7147 Eberdingen-Nussdorf (DE)**

(74) Vertreter: **Patentanwälte Phys. Bartels Dipl.-Ing. Fink Dr.-Ing. Held, Lange Strasse 51, D-7000 Stuttgart 1 (DE)**

(54) Entlüftungskupplung.

(57) Bei einer Entlüftungskupplung zum lösbaren Verbinden von Druckluftleitungen sind zum Trennen des Kupplungssteckers (18) von der Kupplungsbuchse (3) eine erste Sperre (6, 14, 16) mit wenigstens einem ersten Wälzkörper (14) und anschliessend eine zweite Sperre (20, 21, 22) mit wenigstens einem zweiten Wälzkörper (21, 118) durch manuelle Betätigung einer Auslöseeinrichtung (16) zu lösen. Ein zum Lösen der zweiten Sperre (20, 21, 22) vorgesehenes Betätigungselement (18) ist dabei entgegen der Wirkrichtung einer von dem im Inneren der Kupplung herrschenden Druck abhängigen, erst unterhalb eines Grenzwertes überwindbaren Rückstellkraft verschiebbar. Die zweite Sperre (20, 21, 22) weist ein Flanschteil (22) auf, das nach Betätigung der Auslöseeinrichtung (16) und des Betätigungselementes (18) relativ zum letzteren zwischen einer Verriegelungsstellung und einer Freigabestellung verschiebbar ist und in der Verriegelungsstellung den zweiten Wälzkörper (21) in dessen Sperrlage hält.

# Patentanwälte
European Patent Attorneys

**Phys. H. Bartels**
**Dipl.-Ing. H. Fink**
**Dr.-Ing. M. Held**

Zugelassene Vertreter
beim Europäischen Patentamt

Patentanwälte · Lange Straße 51 · D-7000 Stuttgart 1

0 184 799

3. Dezember 1985

Reg. Nr. 126 830

Ref.: 403336


RECTUS-Apparatebau Walter Klein GmbH.,
7147 Eberdingen-Nußdorf

## Entlüftungskupplung

Die Erfindung betrifft eine Entlüftungskupplung, welche die Merkmale des Oberbegriffs des Anspruches 1 aufweist.

Eine Entlüftungskupplung der genannten Art ist durch die DE-AS 11 58 329 bekannt. Bei dieser bekannten Entlüftungskupplung wird eine zwischen einem Kupplungsstecker und einer federbelasteten Auslöseeinrichtung liegende zweite Sperre mit Wälzkörpern nach Betätigung nur der Auslöseeinrichtung durch diese entriegelt und damit der Kupplungsstecker von der Kupplungsmuffe automatisch gelöst.

Der Erfindung liegt die Aufgabe zugrunde, eine Entlüftungskupplung zu schaffen, bei der der Benutzer gezwungen ist, zum Lösen der Verbindung den zu lösenden Kupplungsstecker in der Hand zu halten.

Diese Aufgabe ist erfindungsgemäß durch die im Patentanspruch 1 genannten Merkmale gelöst.

Dadurch, daß die zweite Sperre ein Flanschteil aufweist, das erst nach Betätigung der Auslöseeinrichtung und Einwärtsbewegen des Kupplungssteckers von Hand entgegen der Wirkrichtung des Druckes in der Kupplung, nach Freigabe durch den zweiten Wälzkörper, aus seiner Verriegelungsstellung in eine Freigabestellung verschiebbar ist, wird erreicht, daß in der Freigabestellung des Flanschteiles der zweite Wälzkörper außer Eingriff mit dem Kupplungsstecker gebracht werden kann und somit dieser von der Kupplungsmuffe lösbar ist. Dies ist insofern vorteilhaft, als hierdurch der Benutzer beim Lösen gezwungen ist, den manuell einwärts bewegten Kupplungsstecker während des Lösevorganges in der Hand zu behalten. Dies bedeutet eine Sicherung gegen eine etwaige unkontrollierbare Bewegung des Kupplungssteckers bei der Trennung von der Kupplungsmuffe, da bei einem derartigen Lösen der Verbindung der Benutzer auf jeden Fall zum Lösen beim notwendigen Einwärtsbewegen des Kupplungssteckers bemerkt, ob eventuell, z.B. im Falle einer Störung, der Innendruck in der Kupplung für das Lösen noch zu hoch ist.

Eine wegen ihrer Einfachheit besonders vorteilhafte Ausgestaltung der zweiten Sperre ist Gegenstand der Ansprüche 3 und 4.

Besonders vorteilhaft ist eine Ausführung des Ventilkörpers gemäß Anspruch 5. Die teleskopartige Gestaltung des Ventilkörpers ermöglicht eine äußerst betriebssichere und dennoch einfache Konstruktion der Kupplung. Hierzu trägt auch eine Ausbildung der ersten Sperre gemäß Anspruch 6 und eine Ausbildung des selbstschließenden Ventils gemäß Anspruch 7 bei.

Eine Abdichtung des Kupplungssteckers im eingesteckten Zustand gemäß Anspruch 8 ermöglicht es in einfacher Weise, die beim Lösen der zweiten Sperre zu überwindende Rückstellkraft nicht nur von dem in der Kupplung herrschenden Druck, sondern auch von einer konstruktiv, beispielsweise mit Hilfe einer Feder, festlegbaren Kraftkomponente abhängig zu machen, was eine Festlegung eines geeigneten Grenzwertes wesentlich erleichtert.

Bei einer bevorzugten Ausführungsform gemäß Anspruch 9 ist das
Ventilunterteil kolbenartig im zylinderförmigen Ventilsitz geführt. Dadurch wird in einfacher Weise erreicht, daß der Benutzer
beim Kuppeln, also beim Verbinden des Kupplungssteckers mit der
Kupplungsmuffe, eine von dem in der Kupplung herrschenden Druck
unabhängige Kraft aufbringen muß.

Im folgenden ist die Erfindung anhand eines in der Zeichnung dargestellten Ausführungsbeispiels im einzelnen erläutert.

Es zeigen jeweils im Längsschnitt und nur zur Hälfte dargestellt

Fig. 1    das erste Ausführungsbeispiel im geschlossenen,
          betriebsbereiten Zustand der Kupplung,

Fig. 2    das erste Ausführungsbeispiel nach dem Lösen
          der ersten Sperre,

Fig. 3    das erste Ausführungsbeispiel beim Lösen der
          zweiten Sperre und

Fig. 4    die Kupplungsbuchse des ersten Ausführungsbeispiels im vom Kupplungsstecker getrennten Zustand,

Fig. 5    das zweite Ausführungsbeispiel im geschlossenen, betriebsbereiten Zustand der Kupplung,

Fig. 6    das zweite Ausführungsbeispiel nach dem Lösen
          der ersten Sperre,

Fig. 7    das zweite Ausführungsbeispiel beim Lösen der
          zweiten Sperre und

Fig. 8    die Kupplungsbuchse des zweiten Ausführungsbeispiels im vom Kupplungsstecker getrennten Zustand.

Eine Entlüftungskupplung für Druckluftleitungen weist ein mit
einem zentralen Kanal 1 für den Durchtritt der Druckluft versehenes Gewindestück 2 auf, das den Anschlußteil der als Ganzes mit
3 bezeichneten Kupplungsbuchse bildet. Auf den in das Innere der
Kupplung weisenden Endabschnitt des Gewindestückes 2 ist ein erster Teil 4 eines Ventilkörpers aufgeschraubt, der einen Ringabschnitt eines Ventilsitzes 5 in einer Vertiefung der Innenmantelfläche des Gewindestückes 2 festlegt.

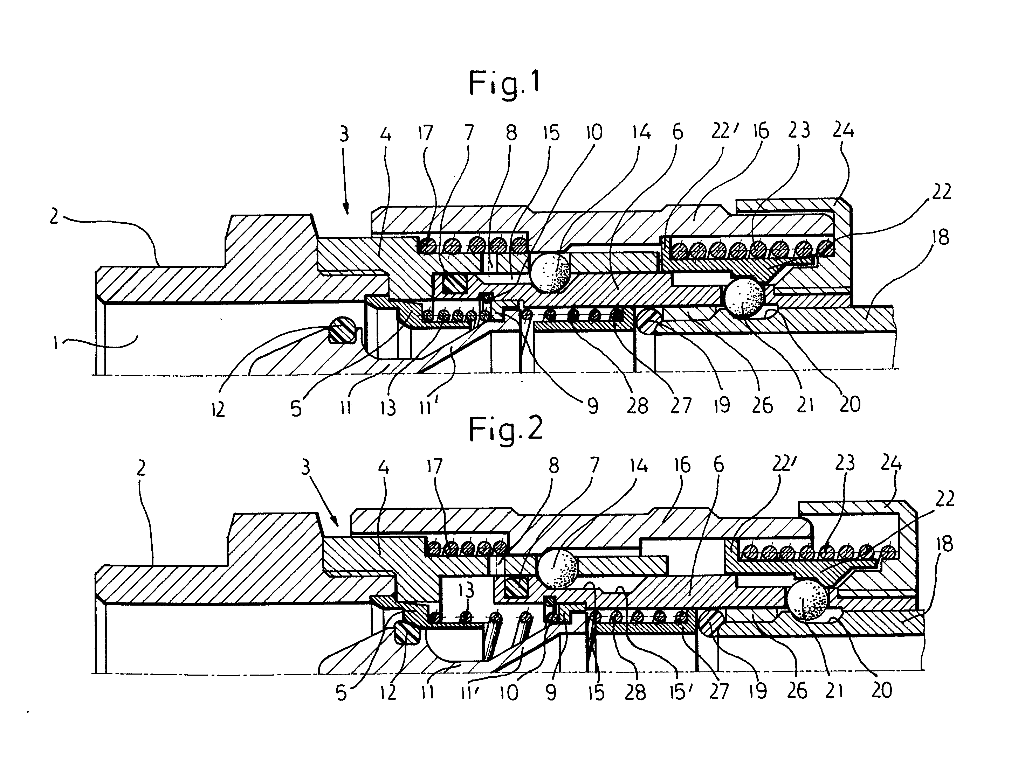

Ein zweiter Teil 6 des Ventilkörpers, der ebenso wie der erste
Teil 4 eine hohlzylindrische Form hat, ist in den ersten Teil 4
von dessen dem Gewindestück 2 abgekehrten Ende her längsverschiebbar eingesetzt, so daß der Ventilkörper eine teleskopartige
Ausbildung hat. An dem gegen das Gewindestück 2 weisenden Ende
ist der zweite Teil 6 des Ventilkörpers in seiner Außenmantelfläche mit einer Nut versehen, in der ein O-Ring 7 liegt, welcher an
der Innenmantelfläche des ersten Teiles 4 anliegt und dadurch
beide Teile in Längsrichtung abdichtet. Bei der in Fig. 1 dargestellten minimalen Länge des Ventilkörpers, bei welcher der den O
-Ring 7 tragende Endabschnitt des zweiten Teils 6 an einem andererseits an dem Gewindestück 2 anliegenden Bund des ersten Teils
4 anliegt, verhindert der O-Ring 7 das Austreten von Druckluft
aus dem Inneren der Kupplung durch radiale Bohrungen 8 im ersten
Teil des Ventilkörpers. Wenn jedoch der Ventilkörper auf seine
maximale Länge vergrößert wird, überfährt, wie die Fig. 2 bis 4
zeigen, der O-Ring 7 die innere Mündungsöffnung der Bohrungen 8
so weit, daß der innere Endabschnitt des zweiten Teiles 6 zumindest teilweise die Bohrungen 8 freigibt. In dieser Stellung des
zweiten Teils 6 des Ventilkörpers relativ zum ersten Teil 4 kann
deshalb Luft aus dem Inneren der Kupplung nach außen strömen, um
den im Inneren herrschenden Druck abzusenken.

In den zweiten Teil 6 des Ventilkörpers ist von dessen gegen das
Gewindestück 2 weisendem Ende her ein Druckring 9 eingesetzt,
dessen geringe axiale Verschiebbarkeit relativ zum zweiten Teil 6
durch eine Schulter desselben sowie einen Sprengring 10 begrenzt
ist. Dieser Druckring 9 dient als Führung und Mitnehmer für ein
Ventilunterteil 11, dessen einen O-Ring 12 in einer Ringnut tragender Abschnitt sich im geöffneten Zustand des Ventils im zentralen Kanal 1 befindet und bei geschlossenem Ventil an eine konische Fläche des Ventilsitzes 5 angepreßt wird. Mit dem Druckring 9 ist dieser Abschnitt des Ventilunterteils 11 über einen Konus definierende Speichen 11' verbunden, deren Abstand in Umfangsrichtung voneinander so groß gewählt ist, daß ein ausreichend großer Durchtrittsquerschnitt für die Preßluft vorhanden
ist. Eine durch eine vorgespannte Schraubenfeder gebildete Ventilfeder 13 stützt sich einerseits am Druckring 9 und andererseits am Ventilsitz 5 ab. Diese Ventilfeder 13 stellt sicher, daß
das vom Ventilsitz 5 und dem Ventilunterteil 11 gebildete Ventil
selbsttätig geschlossen wird und damit den zentralen Kanal 1 absperrt, wenn der zweite Teil 6 des Ventilkörpers sich relativ zum
ersten Teil 4 aus der Position minimaler Länge heraus bewegt, was
der Fall ist, wenn eine diesen beiden Teilen des Ventilkörpers
zugeordnete erste Sperre gelöst wird.

Diese erste Sperre weist im Bereich zwischen den Bohrungen 8 und
dem vom Gewindestück 2 wegweisenden Ende des ersten Teiles 4 in
radialen Bohrungen desselben radial verschiebbar angeordnete Kugeln 14, eine in der Außenmantelfläche des zweiten Teiles 6 des
Ventilkörpers vorgesehene Ringnut 15 sowie eine über den ersten
Teil 4 des Ventilkörpers geschobenen und relativ zu ihm längsverschiebbare Entriegelungshülse 16 auf. Letztere dient gleichzeitig
als Betätigungselement der Auslöseeinrichtung für die erste Sperre. Eine sich einerseits an einer Schulter des ersten Teil 4 des
Ventilkörpers und andererseits an einer Schulter der Entriegelungshülse 16 abstützende, vorgespannte Hülsendruckfeder 17 übt
auf die Entriegelungshülse 16 eine Kraft im Sinne einer Verschiebung weg vom Gewindestück 2 aus. In der in Fig. 1 dargestellten
Verriegelungsstellung der Entriegelungshülse 16 hält ein Innenbund der Entriegelungshülse 16 die Kugeln 14 in der Sperrstellung, in der sie in eine Vertiefung 15' der Ringnut 15 eingreift.
Diese ringnutartige Vertiefung 15' ist dann auf die Kugeln 15
ausgerichtet, wenn der Ventilkörper seine minimale Länge hat.
Letzteres ist der Fall, wenn der unvollständig dargestellte Kupplungsstecker 18 in die Kupplungsbuchse 3 eingesteckt ist.

Zum Trennen der Kupplung muß zunächst die Entriegelungshülse 16 entgegen der Kraft der Hülsendruckfeder 17, bei einer Blickrichtung gemäß Fig. 1 also nach links, so weit bewegt werden, bis der Innenbund nicht mehr auf die Kugeln 14 ausgerichtet ist und diese deshalb sich radial nach außen bewegen können. Die schrägen Flanken der Vertiefung 15' und die Belastung des zweiten Teils 6 durch die Ventilfeder 13 haben dann zur Folge, daß die Kugeln 14 aus der Vertiefung 15' austreten und damit die Verschiebung des zweiten Teils 6 des Ventilkörpers in die in Fig. 2 dargestellte Position erlauben, in welcher die Bohrungen 8 für einen Austritt der Druckluft offen sind. Weilbei dieser Bewegung des zweiten Teils 6 das Ventilunterteil 11 in Anlage an den Ventilsitz 5 kommt, wird der im zentralen Kanal 1 herrschende Druck nicht abgesenkt. Da die Kugeln 14 nun an der dem Gewindestück 2 abgekehrten Flanke des Innenbundes der Entriegelungshülse 16 anliegen, bleibt diese trotz der Kraft der Hülsendruckfeder 17 in ihrer Entriegelungsstellung.

Der Kupplungsstecker 18 ist im Abstand von seinem freien Ende, das dann, wenn der Kupplungsstecker in den zweiten Teil 6 des Ventilkörpers eingesteckt ist, unter Druck an einem O-Ring 19 anliegt, in seiner Außenmantelfläche mit einer Ringnut 20 versehen, die abgeschrägte Flanken hat. Die Ringnut 20 gehört zu einer zweiten Sperre, welche außerdem Kugeln 21, die radial verschiebbar in Bohrungen des zweiten Teils 6 des Ventilkörpers geführt sind, sowie eine den zweiten Teil 6 übergreifende, relativ zu diesem längsverschiebbare Verriegelungshülse 22 aufweist. Diese Verriegelungshülse 22 hat, wie die Figuren zeigen, zwei axiale nebeneinander angeordnete Innenbunde mit unterschiedlichem Innendurchmesser. Eine vorgespannte Schraubdruckfeder 23, welche die Verriegelungshülse 22 umgibt, stützt sich einerseits an einem nach außen weisenden Flanschteil 22' der Verriegelungshülse 22 und andererseits an einem Sicherungsring 24 ab, der auf das freie Ende des zweiten Teils 6 des Ventilkörpers aufgesetzt und mit diesem verbunden ist. Dieser Sicherungsring 24 übergreift das dem Gewindestück 2 abgekehrte Ende der Entriegelungshülse 16 je nach deren Stellung mehr oder weniger weit und verhindert dadurch eine unbeabsichtigte Verschiebung in die Entriegelungsstellung.

Wenn die zweite Sperre geschlossen ist, wie dies die Fig. 1 und 2 zeigen, liegen die Kugeln 21 an dem den größeren Innendurchmesser aufweisenden Innenbund der Verriegelungshülse 22 an. Die Schulter am Übergang zu dem den kleineren Innendurchmesser aufweisenden Innenbund verhindert dabei, daß die Schraubendruckfeder 23 die Verriegelungshülse 22 vom Sicherungsring 24 weg, bei einer Blickrichtung gemäß den Fig. 1 bis 4, also nach links, verschiebt. Da der im Inneren der Kupplung herrschende Druck auf den Kupplungsstecker 18 eine Kraft im Sinne eines Herausschiebens des Kupplungssteckers aus dem zweiten Teil 6 des Ventilkörpers ausübt, liegt die schräge Flanke der Ringnut 20 an den Kugeln 21 an, so daß auf diese eine radial nach außen gerichtete Kraft ausgeübt wird.

Der O-Ring 19, der an der Innenmantelfläche des zweiten Teils 6 des Ventilkörpers dicht anliegt, liegt zwischen einem Distanzring 26 und einem radial nach außen gerichteten Flansch einer Federhülse 27, die beide längsverschiebbar im zweiten Teil 6 des Ventilkörpers geführt sind. Die Federhülse 27 ist von einer vorgespannten, als Schraubendruckfeder ausgebildeten Schließfeder 28 belastet, die sich einerseits am Flansch der Federhülse 27 und andererseits am Ventilunterteil abstützt. Der Endabschnitt des Kupplungssteckers 18 hat einen an den Innendurchmesser des Distanzringes 26 angepaßten Außendurchmesser, so daß dieser Endabschnitt durch den Distanzring 26 hindurch in Anlage an den O-Ring 19 gebracht werden kann.

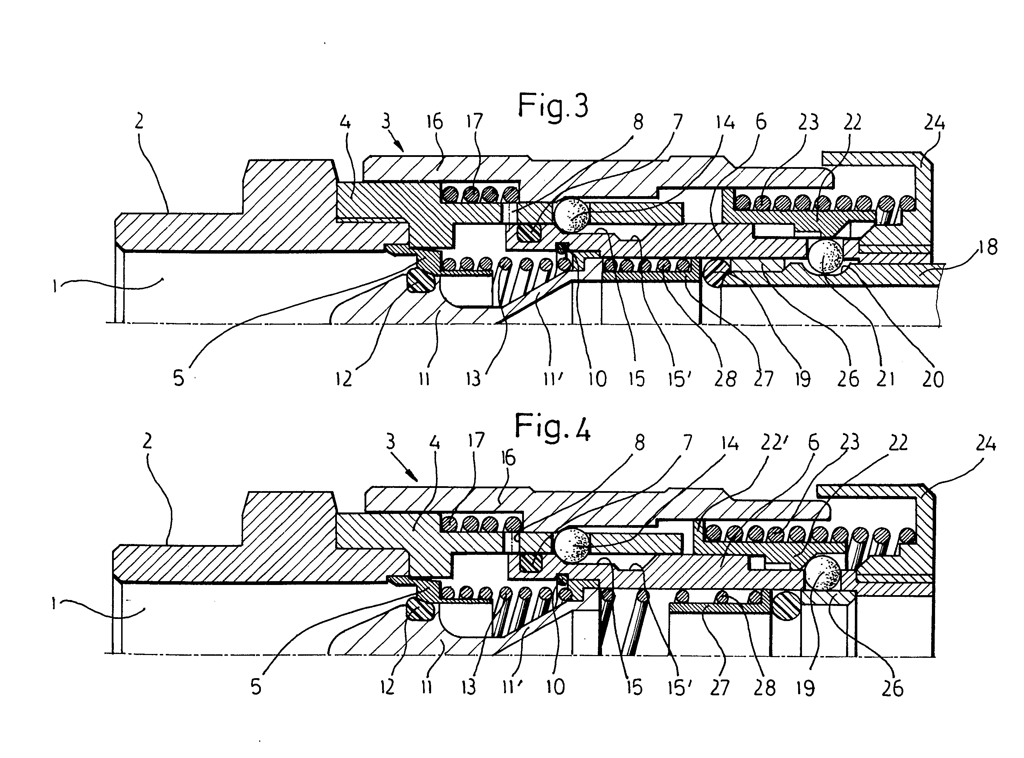

Nachdem die erste Sperre gelöst, die Bohrungen 8 für den Austritt der Druckluft freigegeben und das Ventil geschlossen worden ist, die Kupplung also sich in dem in Fig. 2 dargestellten Zustand befindet, ist der Kupplungsstecker 18 nach wie vor im zweiten Teil 6 des Ventilkörpers verriegelt. Um die zweite Sperre zu lösen, ist es erforderlich, den Kupplungsstecker 18 noch tiefer in den zweiten Teil 6 des Ventilkörpers hineinzudrücken, damit die Kugeln 21 freigegeben werden und sich radial nach innen bis zum Anlage am Grund der Ringnut 20 bewegen können. Erst dann kann die Schraubendruckfeder 23 den im Durchmesser kleineren Innenbund der Verriegelungshülse 22 über die Kugeln 21 hinweg in die in Fig. 4 dargestellte Position schieben, in welcher die Kugeln 21 sich radial so weit nach außen bewegen können, daß sie nicht mehr nach innen über die Innenmantelfläche des zweiten Teils 6 des Ventilkörpers überstehen. Die Kraft der Schraubendruckfeder 28, welche bei eingesetztem Kupplungsstecker 18 die Kugeln 21 in Anlage an der schrägen Flanke der Ringnut 20 und den O-Ring 19 unter dem für einen dichten Verschluß erforderlichen Druck hält, ist so gewählt, daß die zum Lösen der zweiten Sperre erforderliche Verschiebung des Kupplungssteckers 18 noch tiefer in den zweiten Teil 6 des Ventilkörpers hinein, welche nur unter Überwindung des im Inneren der Kupplung zwischen dem Ventil und dem Kupplungsstecker 18 herrschenden Druckes möglich ist, nur dann erfolgen kann, wenn dieser Druck infolge der durch die Bohrungen 8 ausgeströmten Luft so weit abgesenkt ist, daß der Kupplungsstecker 18 gefahrlos aus dem zweiten Teil 6 des Ventilkörpers herausgenommen werden kann. Da hierbei die Bedienungsperson den Kupplungsstecker 18 in der Hand hält, ist eine unkontrollierte Bewegung ausgeschlossen.

Beim Herausziehen des Kupplungssteckers 18 aus der Kupplungsbuchse 3 schiebt die Schraubendruckfeder 28 den Distanzring 26 in die in Fig. 4 dargestellte Position, in welcher die die Kugeln 21 führenden Bohrungen nach innen verschlossen sind.

Wird in die Kupplungsbuchse 3 der Kupplungsstecker 18 eingesteckt, dann werden zunächst der Distanzring 26 und die Federhülse 27 gegen das Ventilunterteil 11 hin verschoben. Sobald die Ringnut 20 des Kupplungssteckers 18 auf die Kugeln 21 ausgerichtet ist, werden in Fortsetzung des Einsteckvorgangs der Ventilkörper auf seine minimale Länge verkürzt und das Ventil geöffnet.
Dabei werden die Bohrungen 8 verschlossen und die beiden Sperren
wirksam gemacht.

Das zweite Ausführungsbeispiel stimmt weitgehend mit dem vorher
besprochenen Ausführungsbeispiel überein. Deshalb sind die entsprechenden Teile mit um 100 größeren Bezugszahlen versehen und
die folgende Beschreibung auf die unterschiedlichen Teile beschränkt.

Beim zweiten Ausführungsbeispiel ist das Ventilunterteil 111 als
Hohlkolben ausgebildet, der mit einer Lagerfläche 141, die durch
einen Teil seiner Außenmantelfläche gebildet ist, längsverschiebbar in einer Führungsfläche 133 des zylinderförmigen Ventilsitzes
105 geführt ist. Diese Führungsfläche 133 ist durch einen Teil
der Innenmantelfläche des Ventilsitzes 105 gebildet. Das Ventilunterteil 111 und der Ventilsitz 105 weisen zu der von der Druckversorgungsquelle beaufschlagten Seite hin geschlossene Stirnseiten 130' bzw. 130 auf. Der Ventilsitz 105 hat an seinem der
Stirnseite abgekehrten Ende einen ringförmigen Mitnehmerflansch,
der durch das Gewindestück 102 und die Entriegelungshülse 116 arretiert ist. Die durch eine vorgespannte Schraubenfeder gebildete
Ventilfeder 113 stützt sich einerseits an dem der Stirnseite 130
entgegengesetzten Ende des Ventilsitzes 105 und andererseits an
der Vorderseite des zweiten Teiles 106 des Ventilkörpers ab. Der
Ventilsitz 105 hat in seinem die Führungsfläche 133 bildenden
Mantel 135 eine durchgehende Öffnung 137, die mit dem zur Druckluftquelle hin gerichteten Kanal 101 verbunden ist.

Desweiteren ist in dem Mantel 135 parallel zur Längsachse des
Ventilsitzes 105 eine Bohrung 139 vorhanden, die den zwischen
den Stirnseiten 130 und 130' vorhandenen Raum beim Kuppeln mit
einer Entlüftungsbohrung 108 verbindet. Das Ventilunterteil 111,
das zwischen einer Versorgungs- und einer Sperrstellung bewegbar
ist, hat in seinem die Lagerfläche 141 bildenden Mantel 143 ebenfalls eine Öffnung 145, die in der Versorgungsstellung zur Deckung mit der Öffnung 137 des Ventilsitzes 105 kommt. In der Sperrstellung wird die Öffnung 137 des Ventilsitzes 105 durch den Mantel 143 des Ventilunterteiles 111 verschlossen. Die Öffnung 145 ist von zwei im Ventilunterteil 111 aufgenommenen O-Ringen 147 und 147' in Achsrichtung abgedichtet. Desweiteren befindet sich ein O-Ring 149 auf dem die Stirnseite 130' bildenden Teil des Ventilkörpers 111.

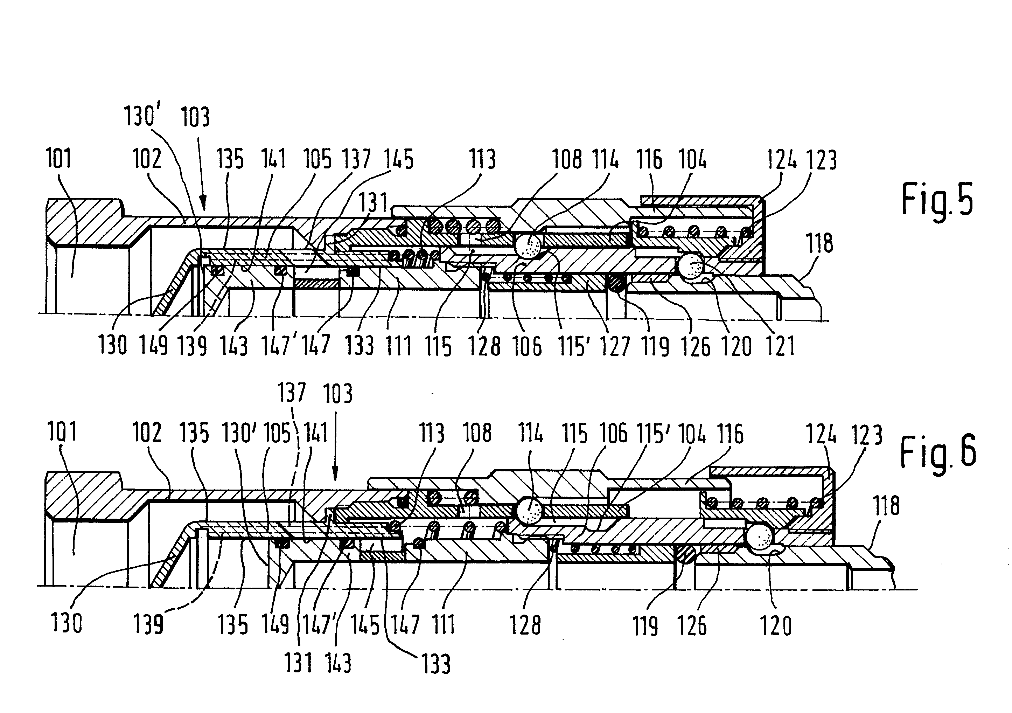

Zum Trennen der Kupplung muß wie beim ersten Ausführungsbeispiel zunächst die Entriegelungshülse 116, die die erste Sperre entriegelt, betätigt werden. Nach dieser Entriegelung bewegt sich aufgrund der vorgespannten Feder 113 der zweite Teil 106 des Ventilkörpers mit dem Ventilunterteil 111 gemäß Fig. 6 nach rechts. Dabei wird die Öffnung 145 des Ventilunterteiles 111 vollständig außer Deckung mit der Öffnung 137 des Ventilsitzes 105 gebracht und die vordere, von der Führungsfläche 133 geführte Lagerfläche 141 verschließt die Öffnung 137 dank der O-Ringe 147'und 149 hermetisch gegenüber der Druckabnehmerseite.

Die Verschiebung des Ventilunterteiles 111 gemäß Fig. 6 nach rechts ist deshalb problemlos möglich, weil der zwischen den Stirnseiten 130 und 130' eingeschlossene Raum über die Entlüftungsbohrung 139 mit der Außenluft verbunden ist, so daß in dem Raum kein die Trennung behindernder Vakuumzustand eintreten kann. Das Lösen der zweiten Sperre wird wie in Ausführungsbeispiel 1 beschrieben durchgeführt.

Beim Kupplungsvorgang, also beim Verbinden des Kupplungssteckers 18 mit der Kupplungsbuchse 3, muß beim ersten Ausführungsbeispiel das Ventilunterteil 11 entgegen der wirksamen Kraft des Druckes bewegt werden. Dies bedeutet, daß der Benutzer über den Kupplungsstecker 18 die Dichtung 29 und über die federbelastete Federhülse 27 das Ventilunterteil 11 entgegen dieser Kraftwirkkomponente verschieben muß, um eine Verbindung der Druckluftquelle mit dem Druckluftabnehmer herzustellen.

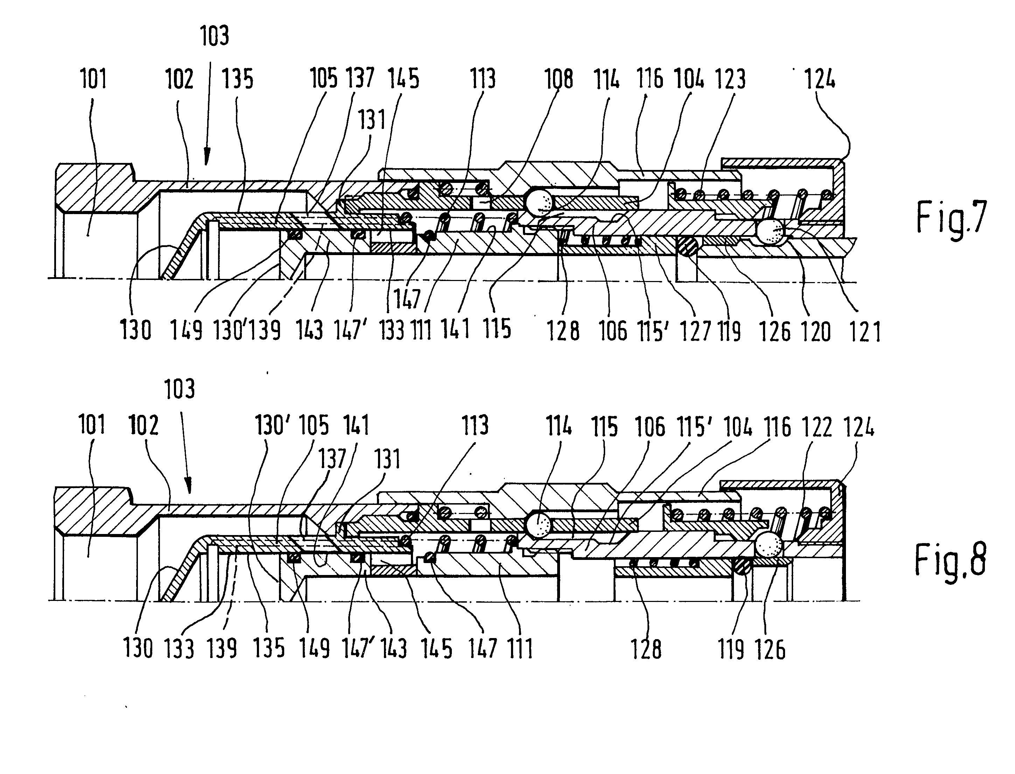

Durch die Anordnung gemäß dem zweiten Ausführungsbeispiel wird dies vermieden. Hier muß das Ventilunterteil 111 nicht entgegen einer durch den Druck gebildeten wirksamen Kraftkomponente verschoben werden, da der als Zylinder ausgebildete Ventilsitz 105 aufgrund seiner geschlossenen Stirnseite 130 allein diese wirksame Kraftkomponente aufnimmt. Dadurch muß der Benutzer eine wesentlich geringere Kraft gegenüber dem ersten Ausführungsbeispiel aufbringen, um das Ventilunterteil 111 gemäß Fig. 7 nach links zu bewegen. Die zwischen den Stirnseiten 130 und 130' eingeschlossene Luftmenge entweicht dabei über die Entlüftungsbohrung 139 und stellt somit kein der Bewegung des Ventilunterteiles 111 entgegenstehendes Druckpolster dar.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

P a t e n t a n s p r ü c h e

1. Entlüftungskupplung zum lösbaren Verbinden von
Druckluftleitungen, bei der zum Trennen des Kupplungssteckers
(18; 118) von der Kupplungsbuchse (3; 103) eine erste Sperre (6,
14, 16; 106, 114, 116) mit wenigstens einem ersten Wälzkörper
(14; 114) zur Freigabe wenigstens einer Entlüftungsöffnung (8;
108) und anschließend eine zweite Sperre (20, 21, 22; 120, 121,
122) mit wenigstens einem zweiten Wälzkörper (21; 121) zur Freigabe des Kupplungssteckers (18; 118) durch manuelle Betätigung
einer Auslöseeinrichtung (16; 116) zu lösen sind, wobei ein zum
Lösen der zweiten Sperre (20, 21, 22; 120, 121, 122) vorgesehenes
Betätigungselement (18; 118) entgegen der Wirkrichtung einer von
dem im Inneren der Kupplung herrschenden Druck abhängigen, erst
unterhalb eines Grenzwertes überwindbaren Rückstellkraft verschiebbar ist, dadurch gekennzeichnet, daß die zweite Sperre (20,
21, 22; 120, 121, 122) ein Flanschteil (22; 122) aufweist, das
nach Betätigung der Auslöseeinrichtung (16; 116) und des Betätigungselementes (18; 118) relativ zum letzteren zwischen einer
Verriegelungsstellung und einer Freigabestellung verschiebbar ist
und in der Verriegelungsstellung den zweiten Wälzkörper (21; 121)
in dessen Sperrlage hält.

2. Entlüftungskupplung nach Anspruch 1, dadurch gekennzeichnet, daß der Kupplungsstecker (18; 118) das Betätigungselement für die zweite Sperre (20, 21, 22; 120, 121, 122) ist.

3. Entlüftungskupplung nach Anspruch 1 oder 2, dadurch
gekennzeichnet, daß der Kupplungsstecker (18; 118) in der Außenmantelfläche eine Ringnut (20; 120) aufweist, in die der Wälzkörper (21; 121), der radial verschiebbar in einem Ventilkörper (4,
6; 104, 106) geführt ist, in seiner Sperrlage eingreift, und daß
das Flanschteil (22; 122) federbelastet und axial relativ zum
Ventilkörper (4, 6; 104, 106) verschiebbar ist, wobei die Innenmantelfläche des Flanschteiles (22; 122) mit Ringzonen unterschiedlichen Durchmessers als Anlageflächen für den Wälzkörper
(21; 121) versehen ist.

4. Entlüftungskupplung nach Anspruch 3, dadurch gekennzeichnet, daß zumindest die dem freien Ende des Kupplungssteckers
(18; 118) näher liegende Flanke der in der Außenmantelfläche des
Kupplungssteckers (18; 118) vorgesehenen Ringnut (20; 120) als
eine den Wälzkörper (21; 121) radial nach außen drückende Rampe
ausgebildet ist.

5. Entlüftungskupplung nach einem der Ansprüche 1 bis
4, dadurch gekennzeichnet, daß der Ventilkörper (4, 6; 104, 106)
zwei teleskopartig ineinander greifende und in Kupplungslängsrichtung relativ zueinander verschiebbare Teile (4, 6; 104, 106)
aufweist, die federbelastet im Sinne einer Längenvergrößerung
sind und in ihrer Stellung minimaler Länge, in der sie mittels
der ersten Sperre (14, 15, 16; 114, 115, 116) miteinander verriegelbar sind, wenigstens eine Entlüftungsöffnung (8; 108) dicht
verschließen, welche in der Stellung maximaler Länge geöffnet
ist.

6. Entlüftungskupplung nach Anspruch 5, dadurch gekennzeichnet, daß die erste Sperre eine Ringnut (15; 115) in der
Außenmantelfläche des in das innere des ersten Teils (4; 104) des
Ventilkörpers eingreifenden zweiten Teils (6; 106), wenigstens
einen im ersten Teil (4; 104) radial verschiebbar geführten Wälzkörper (14; 114) sowie eine federbelastete, in Kupplungslängsrichtung relativ zum ersten Teil (4) des Ventilkörpers verschiebbare Entriegelungshülse (16; 116) aufweist.

7. Entlüftungskupplung nach Anspruch 6, dadurch gekennzeichnet, daß das selbstschließende Ventil (4, 11; 104, 111) einen fest mit dem ersten Teil (4; 104) des Ventilkörpers verbundenen Ventilsitz (5; 105) und einen mittels des zweiten Teils (6; 106) des Ventilkörpers relativ zum Ventilsitz (5; 105) längsverschiebbaren Ventilunterteil (11; 111) aufweist.

8. Entlüftungsventil nach Anspruch 6 oder 7, gekennzeichnet durch einen mittels des freien Endes des Kupplungsstekkers (18; 118) abdichtend belastbaren Dichtungsring (19; 119), der zwischen einem längsverschiebbar im Inneren des zweiten Teils (6; 106) des Ventilkörpers angeordneten Distanzring (26; 126) und einem gegen den Dichtungsring (19; 119) hin federbelasteten, ebenfalls in Längsrichtung des zweiten Teils (6; 106) des Ventilkörpers relativ zu diesem verschiebbaren Ringkörper (27; 127) angeordnet ist.

9. Entlüftungskupplung nach Anspruch 7, dadurch gekennzeichnet, daß das Ventilunterteil (111), welches fest mit dem zweiten Teil (106) des Ventilkörpers verbunden ist und der Ventilsitz (105) zu der von der Druckversorgungsquelle beaufschlagten Seite hin geschlossene Stirnseiten (130, 130') aufweisen, und daß eine Lagerfläche (141) des Ventilunterteiles (111) auf einer Führungsfläche (133) innerhalb des Ventilsitzes (105) zwischen einer Versorgungs- und einer Sperrstellung derart beweglich gelagert ist, daß in der Versorgungsstellung mindestens eine Öffnung (145) der Lagerfläche (141) mit mindestens einer Öffnung (137) der Führungsfläche (133) zur Deckung kommt und in der Sperrstellung die Öffnung (137) der Führungsfläche (133) durch den Ventilunterteil (111) verschlossen ist, wobei der zwischen den Stirnseiten (130, 130') eingeschlossene Raum, über eine Entlüftungsbohrung (139) mit der Entlüftungsöffnung (108) verbunden ist.

- 15 -

10.  Entlüftungskupplung nach Anspruch 9, dadurch gekennzeichnet, daß das Ventilunterteil 111 als Hohlkolben ausgebildet ist, dessen Mantel (143) die Lagerfläche (141) aufweist, und daß der Ventilsitz (105) ein Zylinder ist, dessen Mantel (135) die Führungsfläche (133) aufweist.

- . -

Fig.1

Fig.2

0 184 799

Fig.3

Fig.4

0 184 799

Fig.5

Fig.6

Fig.7

Fig.8

0 184 799